# EUROPEAN PATENT APPLICATION

(11) **EP 2 937 028 A1**
(43) Date of publication of application: **28.10.2015**
(21) Application number: 15164700.5
(22) Date of filing: 22.04.2015
(51) Int. Cl.: A47J 45/07

(54) **REMOVABLE HANDLE FOR COOKING VESSELS**

(30) Priority: 23.04.2014 IT MI20140760
(71) Applicant: L.A.M.P. S.r.l., 23867 Suello (LC) (IT)
(72) Inventor: Valsecchi, Elena, 23867 SUELLO (LC) (IT)
(74) Representative: Fisauli, Beatrice A. M.

(57) **Abstract**

The present invention relates to a removable handle for cooking vessels comprising a coupling portion constrained to the vessel that includes a tab in which there is produced a locking seat delimited by a perimeter edge interrupted by a passage which extends toward a front edge of the tab and a gripping portion that includes a housing for receiving said tab and a connection element movable along a locking direction adapted to cooperated with said locking seat. The connection element comprises a locking portion adapted to couple with the locking seat along a connection and disconnection direction, and a release portion which, in a release position, can pass through the passage when the gripping portion is translated along the connection and disconnection direction.

## Description

The present invention relates to a removable handle for cooking vessels and in particular to a removable handle for cooking vessels provided with a connection and disconnection system that facilitates connection to and disconnection from these vessels.

Typically, cooking vessels such as frying pans, pots, pans or the like are provided with handles of various shapes and sizes that make is easy to hold and move the vessel.

In particular, vessels such as frying pans, grill pans or the like are usually provided with a single long handle that extends laterally from the lateral edge of the vessel.

Although these handles are convenient to grip, they are bulky, in particular when the vessel must be placed in a cupboard, or inside refrigerators, dishwashers or ovens.

To solve these problems, there have been produced many types of frying pans or the like with handles removable by means of connection and disconnection systems that allow the handle to be separated from the edge of the frying pan.

These removable handles are convenient and practical, allowing the empty vessel to be handled more easily and its overall dimensions to be reduced when it has to be transported, stored or put away. In some cases, these handles can also be used on different vessels or, vice versa, handles of different shape can be fitted to the same vessel, according to needs.

However, these handles provided with known connection and disconnection systems are often complicated to produce and impractical to use.

For example, in some cases, the operation of connection and disconnection devices is not very intuitive and the user must make several attempts to fit the handle on the edge of the frying pan.

In fact, these operations often include a combination of several movements, such as a translational movement that allows the handle to be moved toward the edge of the vessel and a vertical rotational movement that allows it to be placed in the locked position.

Besides their limited practicality, handles with this configuration at times do not ensure safe locking on the vessel when it is held in positions other than the position of normal use during cooking, for example when it is overturned during washing, with the risk of becoming disconnected and falling.

Moreover, known connection and disconnection devices are often costly and complicated to produce, as they comprise numerous parts of complex shape.

For this reason, the elements that remain integral with the vessel are often also made of plastic, which prevents it from being used in ovens or the like even after the handle has been removed.

In this context, the object of the present invention is to provide a removable handle for cooking vessels that solves the problems of the prior art described above.

In particular, the aim of the invention is to produce a removable handle for cooking vessels that is practical and convenient to use.

Therefore the object of the present invention is to produce a removable handle for cooking vessels provided with a connection and disconnection system that allows coupling and removal of the handle with a simple and rapid movement.

A further object of the invention is to provide a removable handle for cooking vessels that ensures safe locking of the handle, preventing its accidental release.

Another object of the present invention is to produce a removable handle for cooking vessels that allows the vessel to be placed in an oven or in other high temperature environments after removing the handle.

These objects are achieved by a removable handle for cooking vessels comprising a coupling portion that is stably constrained to the vessel and a gripping portion that can be connected to said coupling portion along a connection and disconnection direction, where the coupling portion comprises:
- a tab in which there is produced a locking seat delimited by a perimeter edge interrupted by a passage which extends toward a front edge of the tab;
   and where the gripping portion comprises:
- a housing for receiving said tab,
- a connection element movable along a locking direction adapted to cooperate with said locking seat;
- a push button for operating said connection element;
in which said connection element comprises a locking portion and a release portion arranged consecutively along the locking and release direction, where in a locked position the locking portion is connected with the perimeter edge of the locking seat so that the gripping portion is constrained to the translation along the connection and disconnection direction, while in a release position said locking portion is moved away from the perimeter edge of the locking seat and the release portion is inside the locking seat, so that in said release position the release portion can pass through the passage when the gripping portion is translated along the connection and disconnection direction.

In one aspect of the invention, the locking and release direction of the connection element is rectilinear and substantially transverse to the connection and disconnection direction of the gripping portion.

In another aspect of the invention, there are provided elastic means, adapted to maintain the connection element against an abutment surface of the gripping portion, in the locked position.

Said elastic means preferably comprise a spring that exerts, directly on the connection element, an elastic force parallel to the locking and release direction.

In yet another aspect of the invention, the locking portion has a perimeter edge at least partly complementary to the perimeter edge of the locking seat so as to adhere thereto in the locked position. Preferably, said perimeter edge is bevelled so as to facilitate connection of the locking portion with the locking seat.

In a further preferred aspect, the locking seat and the locking portion have a substantially circular cross section.

Further characteristics and advantages of the present invention will become more apparent from the description of an example of a preferred, but not exclusive, embodiment of a removable handle for cooking vessels, as illustrated in the accompanying drawings, wherein:
- Figs. 1 a and 1 b are perspective views of the handle according to the invention, respectively in the disconnected and connected positions;

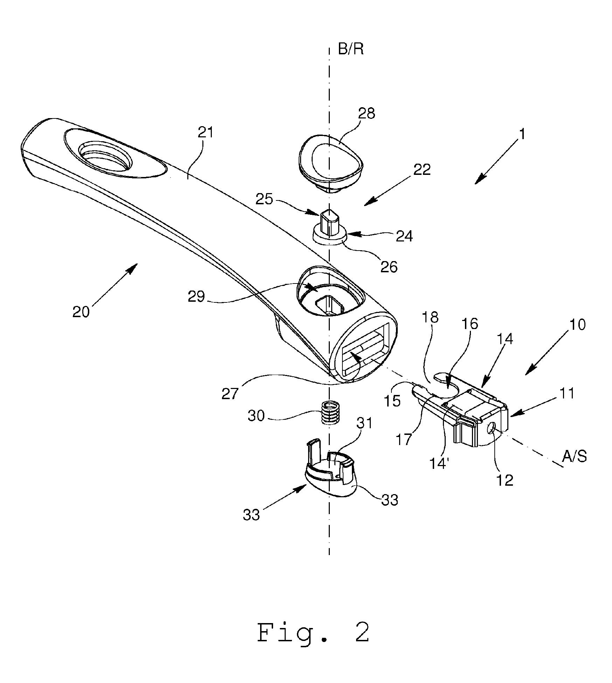

- Fig. 2 is an exploded perspective view of the handle of Fig. 1;

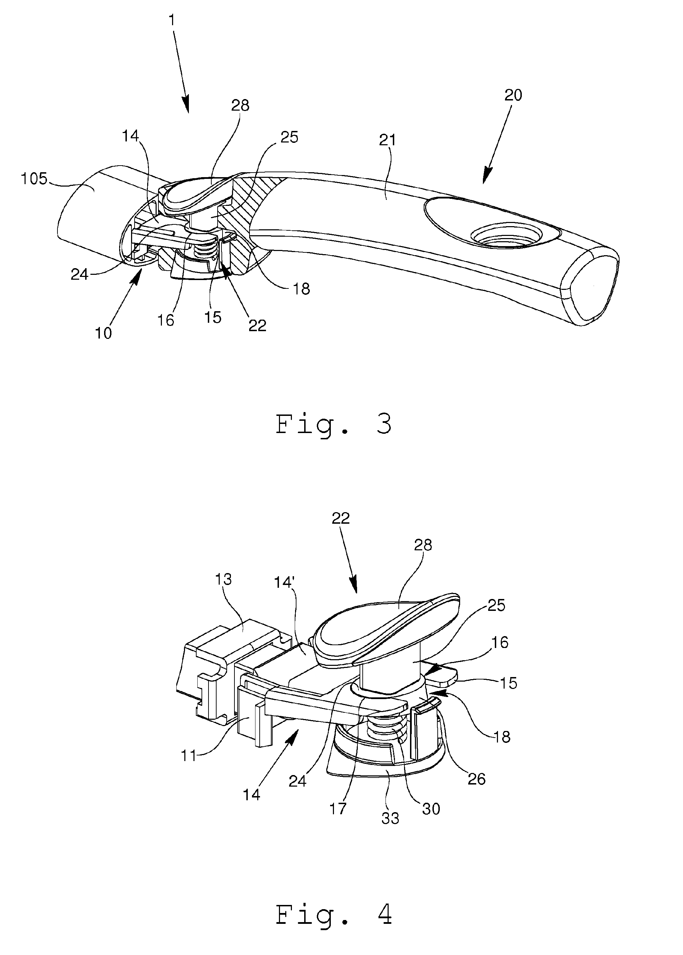

- Fig. 3 is a partially sectional perspective view of the handle of Fig. 1, in the connection position;
- Fig. 4 is a perspective view of a detail of the handle of Fig. 1;
- Figs. 5 to 8 are sectional lateral views of the handle, according to the invention, during the connection and disconnection steps.

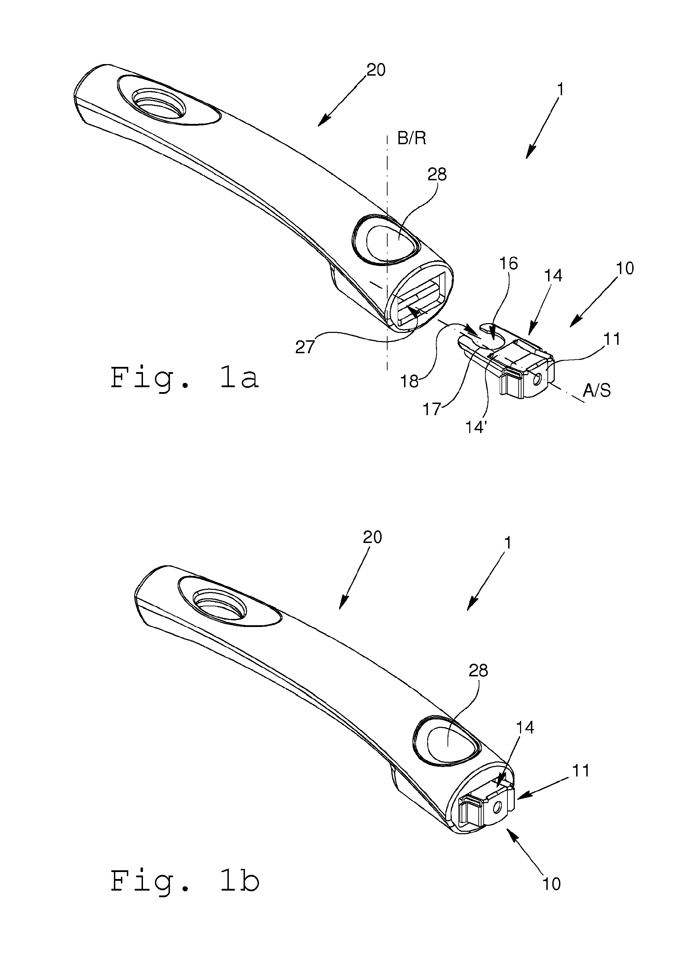

With reference to the accompanying Figs. 1 a and 1 b, the number 1 indicates as a whole a handle for a cooking vessel, and in particular for a cooking vessel produced according to the present invention.

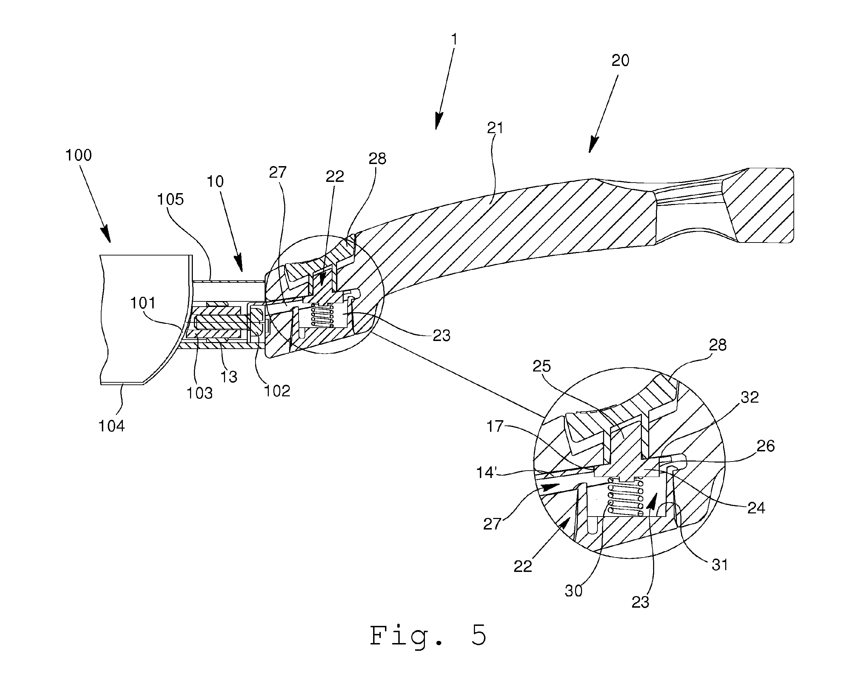

The handle 1 comprises a coupling portion 10, intended to be stably constrained to a vessel 100 (Figs. 5-8), and a gripping portion 20 that can be movably connected to said coupling portion 10 along a connection and disconnection direction A/S indicated in the figure with a double arrow.

In the accompanying figures there is shown a gripping portion 20 having an elongated body generally suitable for use on vessels such as frying pans, grill pans or the like; however, the invention must be intended to include a handle for cooking vessels having a gripping portion of any shape and/or size.

The coupling portion 10 is typically connected to the lateral edge 101 of the vessel 100 through means of known type, such as by screws, rivets or the like.

In a preferred embodiment, the coupling portion 10 comprises a connection portion 11 provided with a hole 12 inside which there is housed a screw 102, or the like, which is screwed into a threaded block 103 integral with the edge 101 of the vessel.

Preferably, between the connection portion 11 and the threaded block 103 there is interposed a bracket 13 on which there can be fixed an ornamental collar 105 that covers the connection means to the vessel.

The coupling portion 10 also comprises a tab 14 that extends from the connection portion 11 in a direction substantially transverse to the edge 101 of the vessel 100.

Advantageously, the connection portion 11 and said tab 14 can be produced in one piece, preferably obtained from a suitably shaped metal plate formed by bending.

The vessel, without the gripping portion 20, can therefore also be taken to high temperatures, for example in an oven with an open flame.

In a preferred embodiment, the tab 14 therefore comprises a flat plate-like portion 14' that extends from the connection portion 11 to a front edge 15.

This plate-like portion 14' can be substantially parallel to the base 104 of the vessel 100 or, preferably, can be arranged sloping slightly upward from the connection portion 11 toward the front edge 15. Sloping slightly is intended, for example, as an angle preferably between 3° and 15°.

According to the invention, on the tab 14 there is produced a locking seat 16 cooperating with a connection element located in the gripping portion 20, described in detail below.

This locking seat 16 passes through the thickness of the plate-like portion 14' and is delimited by a perimeter edge 17 interrupted by a passage 18 which extends up to the front edge 15.

In practice, the locking seat 16 is open toward the front edge 15 of the tab 14 at the passage 18.

According to the invention, this passage 18 has a width d at least less than the width D of the locking seat 16.

This locking seat 16 can have various shapes; for example, its perimeter edge 17 can be curvilinear, can have a polygonal geometry or can be a mixture of the two.

However, in a preferred embodiment, the locking seat 16 has a substantially circular shape.

The gripping portion 20 comprises a body 21 in which there is produced a housing 27 structured for receiving, at least partially, the tab 14 when the gripping portion 20 is connected to the coupling portion 10.

This body is preferably made of a plastic material and, as already mentioned, it can have any shape or dimension that allows it to be easily gripped.

Preferably, the housing 27 has a shape complementary to that of the tab 14 and a size such that when the latter is inserted therein, the gripping portion 20 can only translate along the connection and disconnection direction A/S.

This connection and disconnection direction A/S is a function of the shape of the tab, and in particular of the plate-like portion 14'. In the preferred embodiment, the plate-like portion 14' is flat and therefore the connection and disconnection direction A/S is substantially rectilinear.

To constrain the gripping portion 20 to the coupling portion 10, the former is provided with a connection element, indicated in its entirety with 22, positioned in a recess 23 of the body 21.

In the embodiment illustrated, this recess 23 is communicating with the housing 27 of the tab 14.

Said connection element 22 is movable in the recess 23 along a locking and release direction B/R, substantially transverse to the connection and disconnection direction A/S, respectively to engage and release the locking seat 16 of the tab 14.

According to the invention, said connection element 22 comprises a locking portion 24, adapted to cooperated with the locking seat 16, and a release portion 25.

Said locking portion 24 and said release portion 25 are arranged consecutively along the locking and release direction B/R.

Typically, said locking portion 24 is larger in size with respect to the release portion 25.

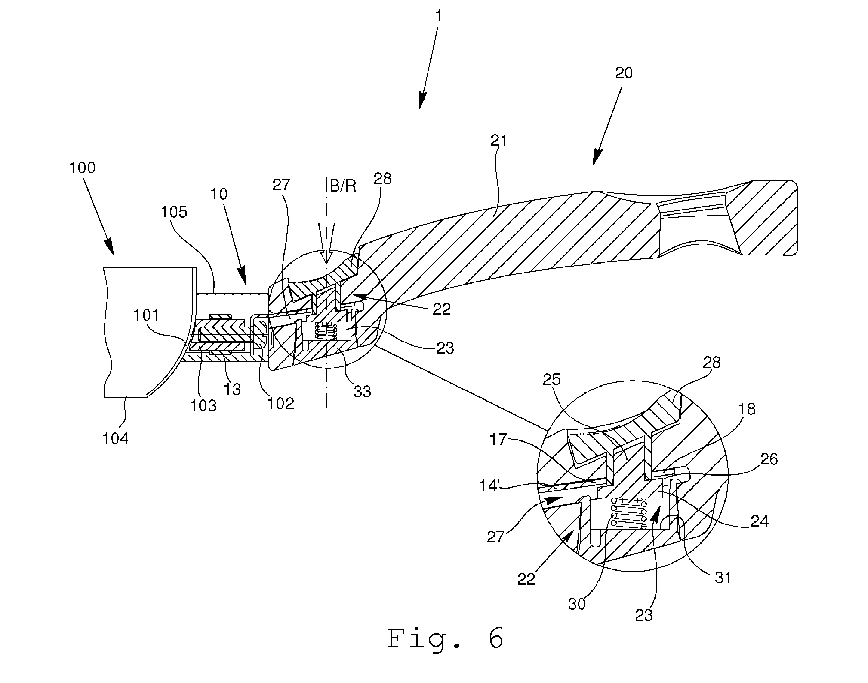

A push button 28, positioned in a seat 29 of the body 21, can be operated by the user to take the connection element 22 from a locked position (Fig. 5) to a released position (Fig. 6). Said push button is therefore movable integral with the connection element 22 along the locking and release direction B/R.

In the embodiment illustrated, the push button 28 acts directly on the release portion 25.

Said push button 28 can be produced in one piece with the connection element 22 or can be connected thereto with interlocking means or the like.

Preferably, the locking portion 24 has a perimeter edge 26 at least partly complementary to the perimeter edge 17 of the locking seat 16 to adhere thereto in the locked position.

This allows stable and backlash-free connection between the gripping portion 20 and the coupling portion 20.

Advantageously, said perimeter edge 26 of the locking portion 24 can have a bevel decreasing toward the release portion 25 to facilitate connection thereof with the perimeter edge 17 of the locking seat 16.

According to the invention, the gripping portion is also provided with elastic means adapted to exert an elastic force on the connection element 22 to maintain it in the locked position.

More in detail, said elastic means comprise a spring 30, interposed between the locking portion 24 and an abutment surface 31 of the body 21.

This spring 30 acts directly on the connection element 22, maintaining it in contact with an abutment surface 32 of the recess 23.

According to a preferred embodiment, the abutment surface 31 is produced on a cover 33 that closes the recess 23.

More in detail, said cover is connected to the body 21 through interlocking means or the like so as to be removable, for example to replace the connection element 22 if it should break or jam.

With reference to Figs. 5 to 8, there are illustrated the steps of connection and disconnection of the gripping portion 20 to/from the coupling portion 10.

Fig. 5 shows the handle in a configuration of use of the vessel, i.e. with the gripping portion 20 connected to the coupling portion 10.

In this condition, the connection element 22 is in the locked position in which the locking portion 24 engages the perimeter edge 17 of the locking seat 16.

As the locking portion 24 typically has a greater width L than the width d of the passage 18 of the tab 14, in this position the gripping portion 20 is constrained to the translation along the connection and disconnection direction A/S.

By pressing the push button 28, the connection element is translated along the locking and release direction toward a release position, visible in Fig. 6.

In this position the locking portion 24 is moved away from the tab 14, disengaging the locking seat 16.

With reference to the accompanying figures, in the release position the connection element 22 is translated downward with respect to a position of typical use of the vessel.

According to a possible variant of the invention, not illustrated, the mechanism can also be produced symmetrically, i.e. with the push button 29 accessible from the lower part of the gripping portion 20 and the connection element 22 configured to translate upward in the passage from the locked position to the release position.

In this released position the release portion 25 is in the space defined by the locking seat 16 in alignment with the passage 18.

The release portion 25, having a smaller cross section with respect to that of the passage 18, can therefore pass freely through said passage beyond the front edge 15 of the tab 14.

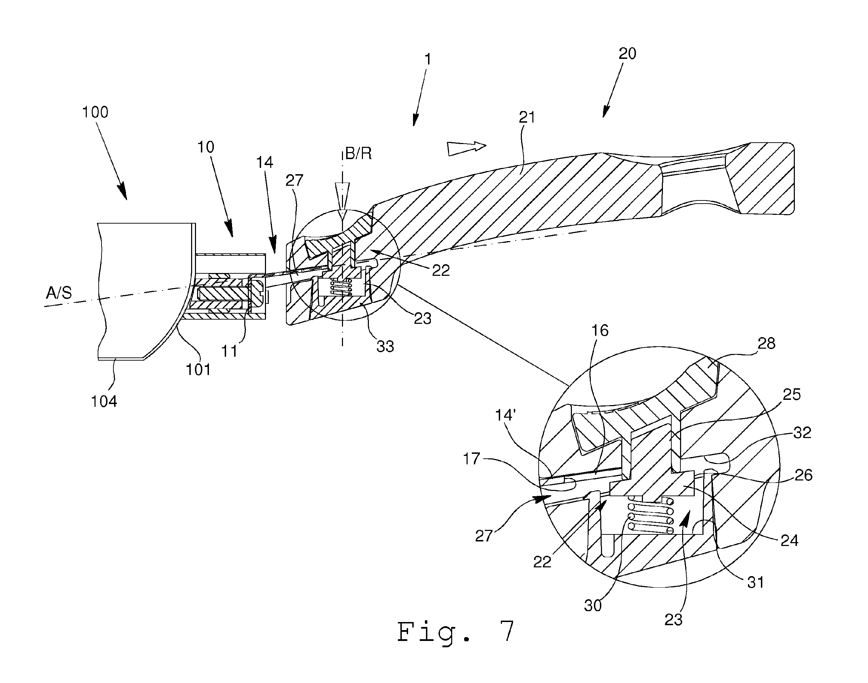

In this way, the gripping portion 20 can translate along the connection and disconnection direction A/S to be disconnected from the coupling portion 10, as indicated by the arrow in Fig. 7.

To connect the gripping portion 20 to the coupling portion 10 the previous operations are repeated in reverse order.

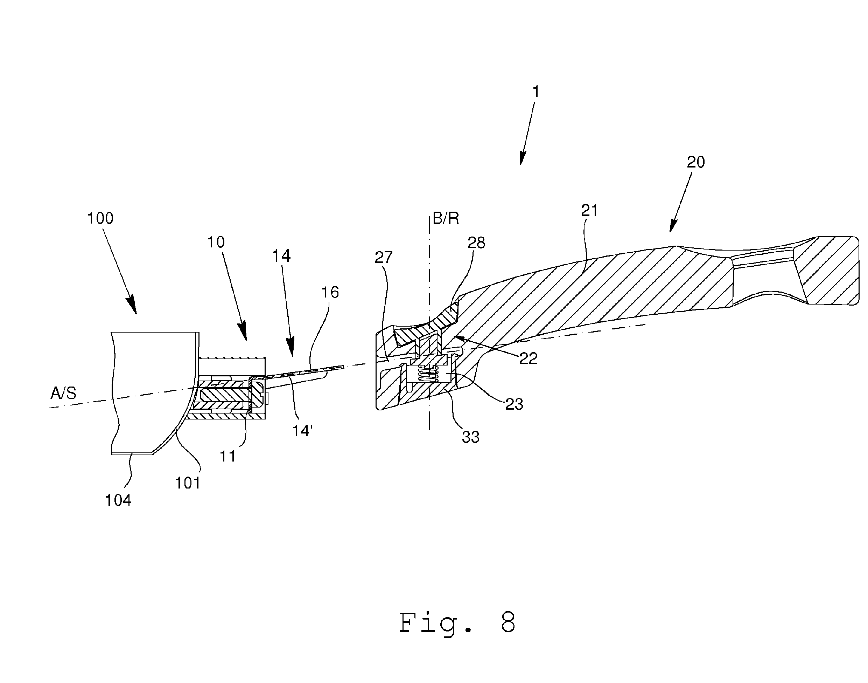

By pressing the push button 28, the locking portion 24 is moved freeing the area of the housing 26 into which the tab 14 must be inserted, as visible in Fig. 8.

At this point, the gripping portion 20 can be moved toward the coupling portion so that the tab enters the housing 27. Fig. 6 represents both the disconnection step and the aforesaid connection step of the gripping portion 20.

Once the tab 14 is inserted completely into the housing 27 (position determined by an abutment of the gripping portion against the coupling portion), the push button 28 is released so that the spring 30 thrusts the connection element 22 toward the locked position.

By doing so, the locking portion 24 rises in the locking seat 16 engaging the perimeter edge 17 thereof with its own perimeter edge 26.

In this step the decreasing cross section of the perimeter edge 26 facilitates insertion of the locking portion into the locking seat 16.

As will be apparent, the handle according to the invention is particularly easy to operate, both in the connection and in the disconnection step.

Moreover, the shape of the tab and of its housing ensures firm connection in any position of the vessel, for example overturned, preventing accidental disconnection of the gripping portion.

As the coupling portion is made entirely of metal, the vessel can also be used at high temperatures, after the gripping portion has been removed.

This makes it possible to limit costs related to the use of plastic materials for high temperatures, which are relatively costly, and to the use of moulds of complex shape.

The present invention, as described and illustrated, may be subject to various modifications and variants, all of which fall within the scope of the inventive concept; furthermore, all the details may be replaced with other technically equivalent elements.

## Claims

1. Removable handle for cooking vessels comprising a coupling portion (10) that can be stably constrained to a vessel (100) and a gripping portion (20) that can be connected to said coupling portion (10) along a connection and disconnection direction (A/S), where the coupling portion (10) comprises:
- a tab (14) in which there is produced a locking seat (16) delimited by a perimeter edge (17) interrupted by a passage (18) which extends toward a front edge (15) of the tab;
and where the gripping portion (20) comprises:
- a housing (27) for receiving said tab (14),
- a connection element (22) movable along a locking and release direction (B/R) adapted to cooperate with said locking seat (16);
- a push button (28) for operating said connection element (22);
in which said connection element (22) comprises a locking portion (24) and a release portion (25) arranged consecutively along the locking and release direction (B/R), where in a locked position the locking portion (24) is connected with a perimeter edge (17) of the locking seat (16) so that the gripping portion (20) is constrained along the connection and disconnection direction (A/S), while in a release position said locking portion (24) is moved away from the perimeter edge (17) of the locking seat (16) and the release portion (25) is inside the locking seat (16), so that in said release position the release portion (25) can pass through the passage (18) when the gripping portion (20) is translated along the connection and disconnection direction (A/S).

2. The handle according to claim 1, wherein the locking and release direction (B/R) of the connection element (22) is rectilinear and substantially transverse to the connection and disconnection direction (A/S) of the gripping portion (20).

3. The handle according to claim 1 or 2, wherein the connection and disconnection direction (A/S) is substantially rectilinear.

4. The handle according to any one of the preceding claims, wherein there are provided elastic means, adapted to maintain the connection element (22) against an abutment surface (32) of the gripping portion (20), in the locked position.

5. The handle according to claim 5, wherein said elastic means comprise a spring (30) that exerts, directly on the connection element (22), an elastic force parallel to the locking and release direction (B/R).

6. The handle according to claim 5, wherein said spring (30) is interposed between the locking portion (24) and an abutment surface (31) in the gripping portion (20).

7. The handle according to claim 6, wherein said abutment surface (31) is produced on a removable cover (32) that closes a recess (23) in which the connection element (22) is housed.

8. The handle according to any one of the preceding claims, wherein the locking portion (24) has a perimeter edge (26) at least partly complementary to the perimeter edge (17) of the locking seat (16) and configured to adhere thereto in the locked position.

9. The handle according to claim 8, wherein the perimeter edge (26) of the locking portion (24) has a decreasing cross section to facilitate insertion into the locking seat (16).

10. The handle according to any one of the preceding claims, wherein the locking seat (16) and the locking portion (24) have a substantially circular cross section.
